# EUROPEAN PATENT APPLICATION

(11) **EP 1 875 994 A1**
(43) Date of publication of application: **09.01.2008**
(21) Application number: 07103337.7
(22) Date of filing: 01.03.2007
(51) Int. Cl.: B27D 5/00, B29C 71/00, H05F 3/06

(54) **Machine tool**

(30) Priority: 07.07.2006 IT MO20060220
(71) Applicant: SCM GROUP S.p.A., 47900 Rimini (IT)
(72) Inventor: Coltro, Davide, 36010, Monticello Conte Otto (VI) (IT)
(74) Representative: Luppi, Luigi

(57) **Abstract**

A machine tool usable in the woodworking industry for machining edges (3) made of plastics or similar materials previously applied to a piece made of wood (4) or similar materials, comprises cutting tool means (7; 27) arranged for removing chips from said piece (4) and an ionising device (8; 28; 38; 48) associated with said cutting tool means (7; 27) and arranged for directing an ionised air flow (18; 218; 318; 418) to a contact zone (19; 219) between said cutting tool means (7; 27) and said piece (4).

## Description

The invention relates to a machine tool for machining a piece made of plastics or similar materials.

In particular, the invention relates to a machine tool useable in the woodworking industry for machining edges made of plastics or similar materials, which edges have been previously applied to a panel made of wood or similar materials.

These panels, made of solid wood or solid wood by-products, for example made of chipboard, or also of plastics, can be used to make furniture, shelving, shelves and the like.

Apparatuses for making panels made of wood or similar materials are known, the panels comprising a frame supporting a movement line extending along an advancing direction of the panel.

The aforesaid frame is further arranged for supporting pressing means positioned above the movement line and arranged for holding the panel during machining and a plurality of work stations, comprising for example an edging station and a finishing station.

The edging station comprises an edging group arranged for applying, through gluing, an edge made of plastics to each side of the panel.

This edge has greater dimensions than the thickness of the panel, i.e. the edge protrudes, so as to ensure complete cover for the thickness.

The finishing station, positioned downstream of the edging station with respect to the advancing direction, comprises a plurality of substations, each of which is provided with a machine tool.

Each machine tool is provided with a cutting unit comprising respective cutting tools, such as, for example, milling cutters, arranged for machining these edges.

These cutting units can, for example, respectively comprise a trimming unit, an edge sanding unit and a corner rounding/profiling unit.

In particular, the trimming unit removes an upper part and a lower part of the edge that exceeds the thickness of the panel, the edge sanding unit makes a radius between the edge applied to the thickness of the panel and the upper and lower surface of the panel, whilst the corner rounding/profiling unit rounds off the profile of the edge after the latter has been applied to the panel.

During the aforesaid machinings performed by the cutting units, and in general during any machining that is performed on pieces made of plastics, through the effect of the contact with the cutting tools, the chips tend to be charged electrostatically.

In this way, the electrostatically charged chips adhere, due to the electrostatic force, not only to the workpiece but also to the cutting tools and to the elements of the machine adjacent to the latter, such as the pressing means and the movement line.

Owing to the adhesion disclosed above, it is not possible to suck the chips away from a contact zone between the cutting tools and the workpiece.

This makes it necessary to clean the panels and the machine tool frequently, with a consequent increase in costs and reduction in productivity.

In fact, the chips adhering to the machine tool may cause malfunctions in the machine tool, the pressing means and the movement line, such as, for example, tearings, jams, or damages that may cause frequent machine downtime as well as detracting from the aesthetic appeal of the machined piece.

Also, the electrostatically charged chips may give the operator electric discharges or shocks that may compromise the safety of the operator.

An object of the invention is to improve machine tools for machining pieces made of plastics or similar materials, in particular machine tools that are usable for machining edges made of plastics or similar materials previously applied to a panel made of wood or similar materials.

A further object is to make machine tools that enable both the quality of the machining and the productivity of known machines to be increased.

A still further object is to provide machine tools that are safer for an operator than known machine tools.

According to the invention, a machine tool is provided that is usable in the woodworking industry for machining edges made of plastics or similar materials previously applied to a piece made of wood or similar materials, said machine tool comprising cutting tool means arranged for removing chips from said piece, characterised in that said machine tool further comprises an ionising device associated with said cutting tool means and arranged for directing an ionised air flow to a contact zone between said cutting tool means and said piece.

Owing to this aspect of the invention it is possible to neutralise the electrostatic charge on the chips removed from the pieces made of plastics.

In fact, the electrically charged chips are hit by the ionised air flow and become electrically neutral.

This enables the chips to be sucked effectively through a suitable sucking apparatus from the contact zone between the cutting tool means and the workpiece.

In this way, it is no longer necessary to clean both the panel and the cutting tools, so machine downtime and therefore costs are decreased and machine tool productivity is increased.

It is further possible to increase operator safety, inasmuch as the electric charges present near the machine tool are neutralised by the ionising device.

The invention can be better understood and carried into effect with reference to the attached drawings in which some embodiments of the invention are shown by way of nonlimiting example, in which:
Figure 1 is a fragmentary prospective schematic view of a first machine tool provided with a first ionising device;
Figure 2 is a fragmentary prospective schematic view of a second machine tool provided with a second ionising device;
Figure 3 is a fragmentary prospective schematic view of a third machine tool provided with a third ionising device;
Figure 4 is a fragmentary prospective schematic view of a fourth machine tool provided with a fourth ionising device.

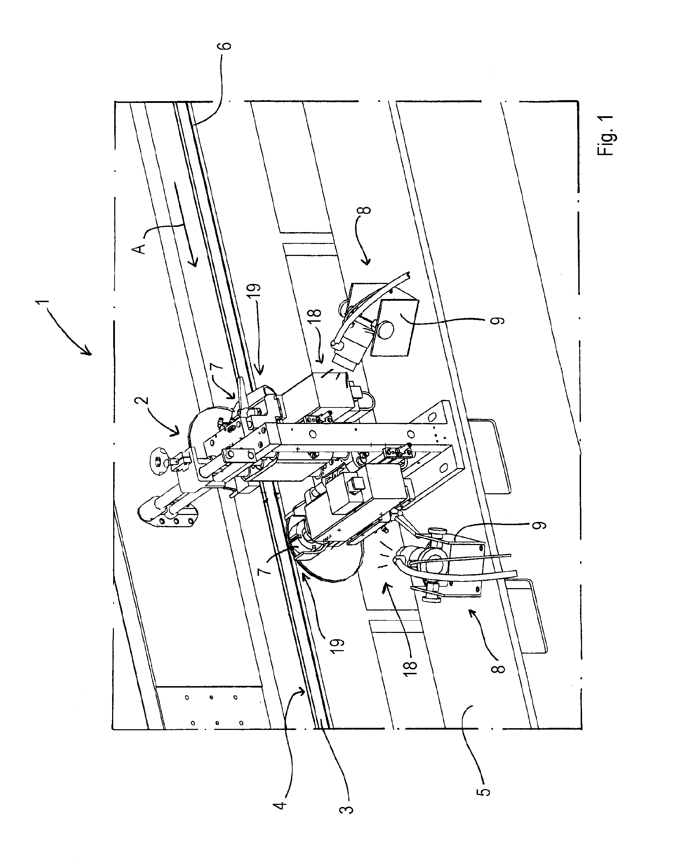

With reference to Figure 1, there is shown a first machine tool 1 that is usable in the woodworking industry for performing a machining on edges 3 made of plastics or similar materials, which edges are previously applied to a panel 4 made of wood or similar materials.

The first machine tool 1 is associated with a first frame 5 supporting a first movement line 6 arranged for moving the panel 4 along an advancing direction A.

The first frame 5 further supports first pressing means, which is not shown, positioned above the first movement line 6 and arranged for holding the panel 4 during machinings.

The first machine tool 1 comprises a trimming unit 2 that is of known type and is therefore not disclosed in detail.

The trimming unit 2 is provided with first cutting tools 7, for example a pair of suitably shaped milling cutters, arranged for respectively removing a first part and a second part, which are not shown, of the edge 3 exceeding a thickness of the panel 4.

The first machine 1 further comprises a first ionising device 8 associated with the first frame 5.

The first ionising device 8 is provided with a first pair of ionising guns 9, which are of known type and are widely available commercially, each arranged for directing a respective first ionised air flow 18 to first contact zones 19 between the first cutting tools 7 and the panel 4.

In this way, during operation, the chips removed by, and charged electrostatically through contact with, the first cutting tools 7 are neutralised electrically by the first ionising device 8 and therefore removed by a sucking unit that is not shown.

In an embodiment of the invention, which is not shown, the first ionising device 8 comprises a single ionising element. In a further embodiment of the invention, which is not shown, the first ionising device 8 comprises more than two ionising elements.

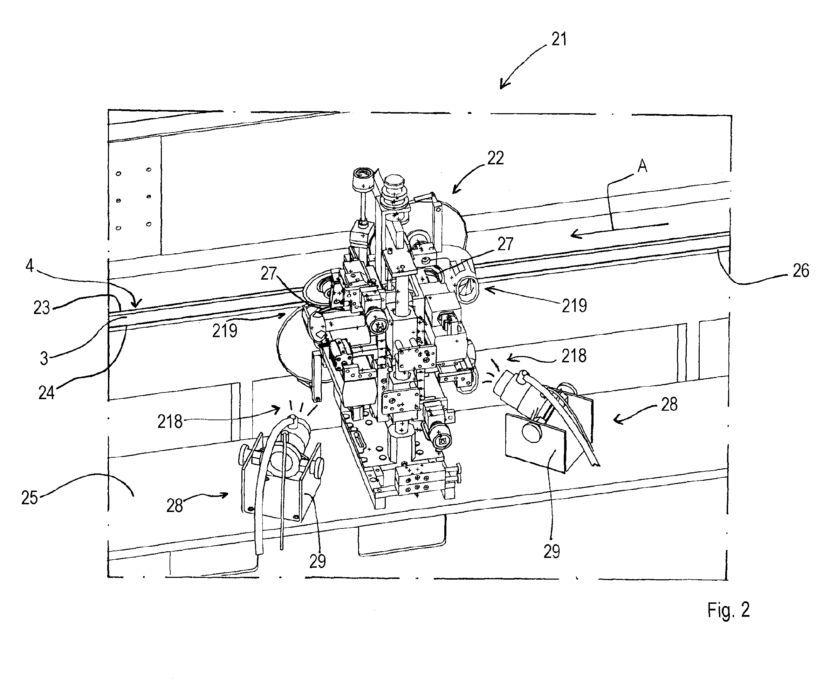

With reference to Figure 2, there is shown a second machine tool 21 that is usable in the woodworking industry for performing edge-sanding on the edges 3 previously applied to the panel 4.

The second machine tool 21 is associated with a second frame 25 supporting a second movement line 26 arranged for moving the panel 4 along the advancing direction A.

The second frame 25 further supports second pressing means, which is not shown, positioned above the second movement line 26 and arranged for holding the panel 4 during edge sanding.

The second machine tool 1 comprises an edge sanding unit 22 that is of known type and is therefore not disclosed in detail.

The edge sanding unit 22 is provided with second cutting tools 27, for example a pair of suitably shaped milling cutters, arranged for making a radius between the edge 3 applied to the panel 4 and respectively a first surface 23 and a second surface 24 of the panel 4.

The second machine 21 further comprises a second ionising device 28 associated with the second frame 25.

The second ionising device 28 is provided with a second pair of ionising guns 29, which are of known type and are widely available commercially, each arranged for directing a respective second ionised air flow 218 to second contact zones 219 between the second cutting tools 27 and the panel 4.

In this way, during operation, the chips removed by, and electrostatically charged through the contact with, the second cutting tools 27 are electrically neutralised by the second ionising device 28 and then removed by a sucking unit, which is not shown.

In an embodiment of the invention, which is not shown, the second ionising device 28 comprises a single ionising element.

In a further embodiment of the invention, which is not shown, the second ionising device 28 comprises more than two ionising elements.

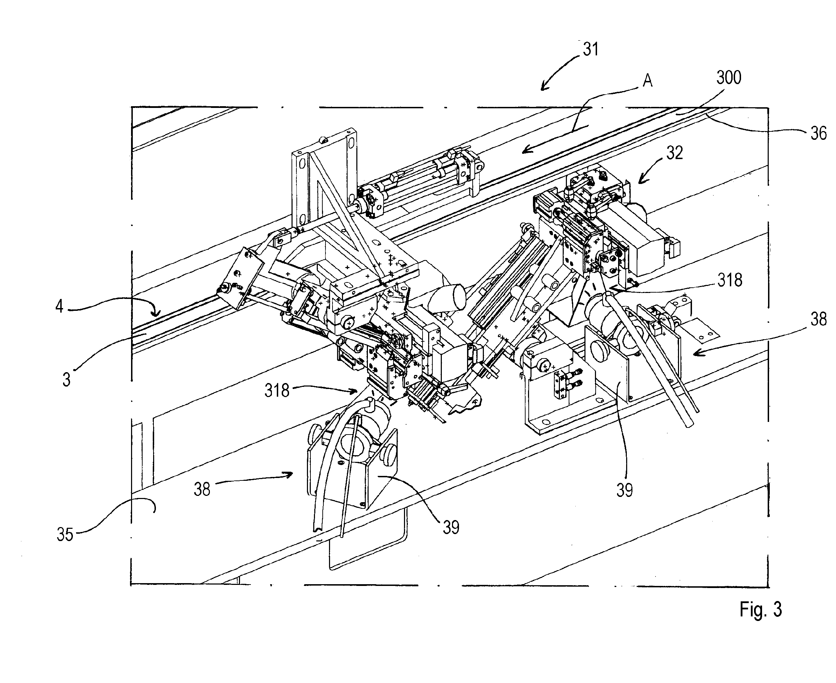

With reference to Figure 3 there is shown a third machine tool 31 that is usable in the woodworking industry for performing a rounding/profiling machining on the edges 3 previously applied to the panel 4.

The third machine tool 21 is associated to a third frame 35 supporting a third movement line 36 arranged for moving the panel 4 along the advancing direction A.

The third frame 35 further supports third pressing means, which is not shown, which is positioned above the third movement line 36 and arranged for holding the panel 4 during machinings.

The third machine tool 31 comprises a corner rounding/profiling unit 32, which is the object of patent ITB098A000614 which has been filed by the applicant and which is for that reason not disclosed in detail.

The corner rounding/profiling unit 32 is provided with third cutting tools, which are not shown, for example a pair of suitably shaped milling cutters, arranged for rounding off a profile 300 of the edge 3 after the latter has been applied to the panel 4.

The third machine 31 further comprises a third ionising device 38 associated with the third frame 35.

The third ionising device 38 is provided with a third pair of ionising guns 39, which are of known type and are widely available commercially, each arranged for directing a respective third ionised air flow 318 to third contact zones between the third cutting tools and the panel 4.

In this way, during operation, the chips removed by, and electrostatically charged through the contact with, the third cutting tools are neutralised electrically by the third ionising device 38 and then removed by a sucking unit, which is not shown.

In an embodiment of the invention, which is not shown, the third ionising device 38 comprises a single ionising element.

In a further embodiment of the invention, which is not shown, the third ionising device 38 comprises more than two ionising elements.

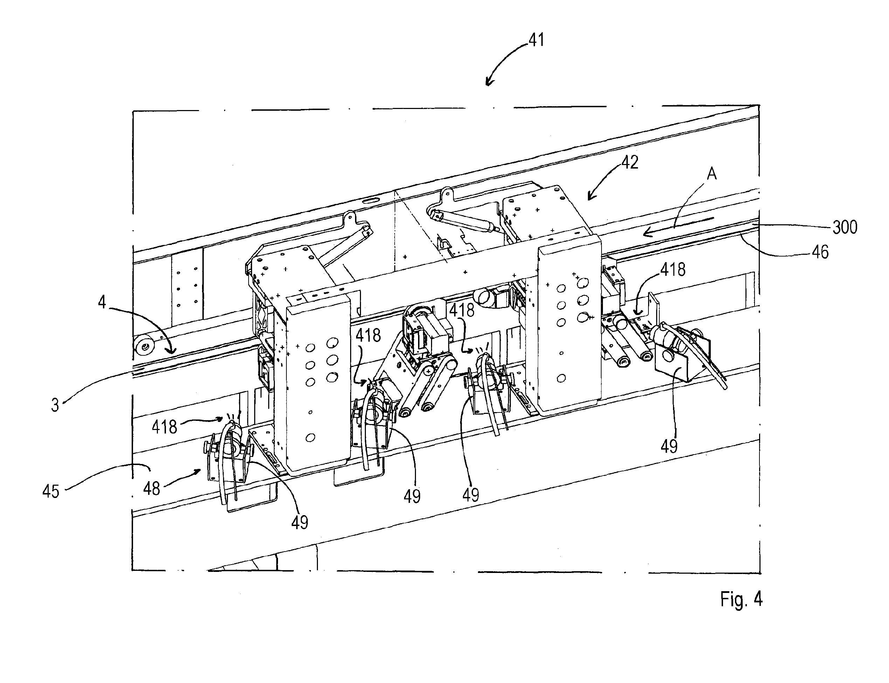

With reference to Figure 4, there is shown a fourth machine tool 41 that is usable in the woodworking industry for performing a rounding/profiling machining on the edges 3 previously applied to the panel 4.

The fourth machine tool 41 is associated with a fourth frame 45 supporting a fourth movement line 46 arranged for moving the panel 4 along the advancing direction A.

The fourth frame 45 further supports fourth pressing means, which is not shown, positioned above the fourth movement line 46 and arranged for holding the panel 4 during machinings.

The fourth machine tool 41 comprises a further corner rounding/profiling unit 42, provided with fourth cutting tools, which are not shown, for example four in number, arranged for rounding off the profile 300 of the edge 3 after the latter has been applied to the panel 4.

The fourth machine 31 further comprises a fourth ionising device 48 associated with the fourth frame 45.

The fourth ionising device 48 is provided with four ionising guns 49, which are of known type and are widely available commercially, each arranged for directing a respective fourth ionised air flow 418 to respective fourth contact zones between the fourth cutting tools and the panel 4.

In this way, during operation, the chips removed by, and electrostatically charged through the contact with, the fourth cutting tools are neutralised electrically by the fourth ionising device 48 and then removed by a sucking unit, which is not shown.

In an embodiment of the invention, which is not shown, the fourth ionising device 48 comprises a single ionising element.

In a further embodiment of the invention, which is not shown, the fourth ionising device 48 comprises more than four ionising elements.

In a still further embodiment of the invention, which is not shown, the first machine tool 1, the second machine tool 21 and the third machine tool 31 (or the fourth machine tool 41), are associated with the same frame and are positioned one after the other along the advancing direction A and are part of an apparatus for machining pieces made of wood or similar materials.

In another embodiment of the invention, which is not shown, associating a machine tool arranged for performing machinings for removing chips on pieces made of plastics or similar materials with an ionising device of the type disclosed above is provided for.

## Claims

1. Machine tool usable in the woodworking industry for machining edges (3) made of plastics or similar materials previously applied to a piece made of wood (4) or similar materials, said machine tool comprising cutting tool means (7; 27) arranged for removing chips from said piece (4), **characterised in that** said machine tool further comprises an ionising device (8; 28; 38; 48) associated with said cutting tool means (7; 27) and arranged for directing an ionised air flow (18; 218; 318; 418) to a contact zone (19; 219) between said cutting tool means (7; 27) and said piece (4).

2. Machine according to claim 1, wherein said ionising device (8; 28; 38; 48) is associated with supporting frame means (5; 25; 35; 45) of said machine (1; 21; 31; 41).

3. Machine according to claim 1, or 2, wherein said ionising device (8; 28; 38; 48) comprises at least an ionising gun (9; 29; 39; 49).

4. Machine according to any preceding claim, wherein said cutting tool means (7; 27) is part of a trimming unit (2) of a machine (1) for machining panels (4) made of wood, or made of similar materials.

5. Machine according to any one of claims 1 to 3, wherein said cutting tool means (7; 27) is part of an edge sanding unit (22) of a machine (21) for machining panels (4) made of wood, or made of similar materials.

6. Machine according to any one of claims 1 to 3, wherein said cutting tool means (7; 27) is part of a corner rounding/profiling unit (32) of a machine (31) for machining panels (4) in wood, or made of similar materials.
